# FASCICULE DE BREVET EUROPEEN

(11) **EP 4 481 001 B1**
(45) Date de publication et mention de la délivrance du brevet: **18.02.2026**
(21) Numéro de dépôt: 24183119.7
(22) Date de dépôt: 19.06.2024
(51) Int. Cl.: C08L 67/02

(54) **COMPOSITION DE (CO)POLYESTERS, FILM MONOCOUCHE ET UTILISATION POUR SACHET D EMBALLAGE**
(CO)POLYESTERZUSAMMENSETZUNG, MONOSCHICHTFOLIE UND VERWENDUNG FÜR VERPACKUNGSBEUTEL
(CO)POLYESTER COMPOSITION, MONOLAYER FILM AND USE FOR PACKAGING POUCH

(30) Priorité: 21.06.2023 FR 2306403
(43) Date de publication de la demande: 25.12.2024
(73) Titulaire: La Boulangère, 85140 Les Essarts en Bocage (FR)
(72) Inventeur: LAJARRIGE, Anaïs, 56530 GESTEL (FR); JUILLAN, Lucie, 85170 Bellevigny Belleville-sur-Vie (FR)
(74) Mandataire: Eveillard, Sophie

(56) Documents cités:
- US-A1- 2012 107 630
- US-A1- 2012 259 028

## Description

La présente invention se rapporte au domaine des emballages souples, aptes au contact alimentaire. Elle concerne plus particulièrement des compositions de polymères biodégradables et avantageusement compostables, utilisables pour la fabrication de films souples monocouches présentant une perméabilité à la vapeur d'eau particulièrement faible et utilisables pour l'emballage alimentaire.

### Art antérieur

La production mondiale de matières plastiques ne cesse d'augmenter et a atteint 390 millions de tonnes en 2021, consommant près de 10% de la production mondiale de pétrole. En Europe, c'est plus de 57 millions de tonnes qui ont été produites en 2021 (PlasticsEurope, 2022, notamment https://plasticseurope.org/wp-content/uploads/2023/03/PE-PLASTICS-THE-FACTS_FINAL_DIGITAL-1.pdf).

Les polyéthylènes de basse et haute densité, respectivement LDPE/LLDPE et HDPE, ainsi que le polypropylène sont les matières plastiques les plus utilisées, ils représentent respectivement 14.7%, 9.3% et 16.6% de l'ensemble des matières plastiques.

Le domaine de l'emballage est le plus consommateur de ces matières plastiques avec plus de 40% de la demande en 2021. Leur grand succès est dû à leur extrême polyvalence. Dans le domaine de l'emballage alimentaire, ils sont indispensables pour protéger les denrées et assurer leur préservation et leurs qualités nutritives et gustatives jusqu'à leur consommation. Cependant, à cause de leur longue durée de vie, leur impact sur l'environnement est considérable.

Des filières de collecte et de traitement de ces matières plastiques ont été mises en place pour limiter la pollution environnementale mais ces filières restent partielles. En effet, des déchets plastiques échappent à la collecte et finissent dans l'environnement. A titre d'exemple, la quantité de déchets plastiques dans les océans a été estimée à 150 millions de tonnes métriques en 2015 et devrait atteindre 600 millions de tonnes métriques d'ici 2040 si rien ne change (National geographic, 2020, notamment https://www.nationalgeographic.fr/environnement/2020/08/la-quantite-de-plastique-dans-les-oceans-devrait-tripler-dici-2040).

Concernant les filières de traitement, elles évoluent d'année en année. En 2020, 29,5 millions de tonnes de déchets plastiques post-consommation ont été collectés en Europe. Plus d'un tiers (35%) a été recyclé, 42% ont été incinérés et 23% ont été enfouis (PlaticsEurope, 2022).

Plus spécifiquement, le recyclage des emballages plastiques en France s'est élevé à environ 30% en 2021 (CITEO, notamment https://www.citeo.com/le-mag/les-chiffres-du-recyclage-en-france). Ce chiffre est relativement faible, et le devenir des différents contenants très contrastés : 59% pour les bouteilles et flacons et seulement 11% pour les autres emballages en plastique. En effet, les filières de recyclage évoluent mais tous les plastiques ne sont pas actuellement recyclés. Seuls les PET et les PEHD ont des filières de recyclage établies.

Pour les emballages souples en plastique, le recyclage est plus compliqué. En 2018, 310 000 tonnes ont été mises sur le maché, 13% en polypropylène (PP), 39% en polyéthylène (PE) et 48% en autres plastiques (complexages, etc.) (CITEO, notamment https://bo.citeo.com/sites/default/fil es/2020-11/20201124_brochure_R%26D_Citeo_pap_finale.pdf). Seuls les emballages souples en PE peuvent être actuellement recyclés ou plutôt transformés en granulés qui pourront servir à la fabrication d'autres produits en plastique tels que des tuyaux ou des sacs pour stocker les déchets.

Dans ce contexte, il apparaît indispensable de trouver des alternatives à ces matières plastiques conventionnelles.

Depuis plusieurs années des innovations voient le jour, notamment dans le domaine des plastiques biosourcés et biodégradables. Ces matières sont déjà utilisées pour la fabrication de différents produits notamment des sacs en plastique. Des exemples de ces polymères sont l'acide polylactique (PLA), le polybutylène succinate (PBS) et ses dérivés ou encore les polyhydroxyalcanoates (PHA).

Ces matériaux alternatifs disponibles sur le marché ont des propriétés spécifiques avec des avantages et des inconvénients pour chaque application : trop souple ou trop rigide, mauvaise stabilité thermique, propriétés barrières insuffisantes, etc. C'est principalement la raison pour laquelle ils sont peu utilisés dans l'emballage alimentaire.

Or il demeure un besoin d'avoir à disposition des emballages souples utilisables dans le domaine alimentaire et qui présentent des propriétés barrières suffisantes notamment une faible perméabilité à la vapeur d'eau. Dans le contexte présenté ci-dessus, il demeure également un besoin d'avoir à disposition de tels emballages qui soient au moins partiellement biosourcés, et également biodégradables, de préférence compostables.

Il existe déjà des demandes de brevet qui décrivent des feuilles en polymères biodégradables, multicouches c'est-à-dire formées de plusieurs couches composées de polymère(s) différent(s). La combinaison de ces différentes couches de polymères permet de bénéficier des avantages de chacun d'eux. A titre d'exemple, on peut citer la demande WO2020/222232 qui vise une feuille multicouche formée d'une première et d'une seconde couches externes de polymères comprenant du PBS ou du PBSA et d'une couche interne comprenant de 70 à 80% en poids de PLA et de 20 à 30% en poids de PCL, ce type de feuilles présente une bonne résistance physique et aussi aux températures élevées. Ces feuilles sont principalement utilisées pour fabriquer des récipients pour contenir des liquides.

US 2012/259028 A1 décrit une composition comprenant 62,5% de PLA, 31,25% du PBAT et 0,09% d'erucamide.

Une solution pour améliorer les propriétés barrières, proposée notamment dans EP 2 790 920 a été d'ajouter à la composition de polymères des éléments tels que des nano-argiles, cependant l'usage de nanoparticules est aujourd'hui controversé en particulier dans le domaine de l'alimentaire. En outre, il est très difficile de recycler des articles intégrants des nanoparticules en tant que charges, de manière générale la migration potentielle de ces nanoparticules pose des questions.

Il demeure toujours un besoin d'avoir à disposition des compositions de polymères permettant l'obtention de films pour l'emballage présentant une faible perméabilité à la vapeur d'eau et faciles à mettre en œuvre en utilisant les outils de la plasturgie conventionnelle.

Les inventeurs ont ainsi orienté leurs recherches vers des compositions de polymères permettant l'obtention de films monocouches.

Des feuilles monocouches à base de mélanges de (co)polyesters, imperméables aux gaz sont également décrites notamment dans EP 2 998 342 A2, ces feuilles comprennent majoritairement des polymères rigides : elles sont typiquement formées de 80% en poids de PBS et de 20 % en poids de PLA. Ces feuilles ne présentent pas les propriétés mécaniques recherchées pour les films monocouches selon l'invention, notamment en termes de capacité de pliage ou de rigidité puisque la feuille de composition 80% en poids de PBS et de 20 % en poids de PLA possède un module de Young égal à 569 MPa.

### Résumé de l'invention

De manière surprenante et avantageuse les inventeurs ont mis au point une composition de (co)polyesters particulière présentant des propriétés mécaniques adéquates pour la formation de films monocouches utilisables pour l'emballage alimentaire, ces films présentant en particulier des propriétés barrières améliorées notamment en termes de perméabilité à la vapeur d'eau.

Un premier objet de la présente invention vise une composition comprenant :
- de 68% à 75 %, de préférence de 69% à 75% en poids d'au moins un (co)polyester rigide choisi dans le groupe formé par le polybutylene succinate (PBS), le polylactide (PLA), le polyhydroxyalcanoate (PHA), par rapport au poids total de la composition ;
- de 25 à 35 % en poids d'au moins un (co)polyester flexible choisi dans le groupe formé par le polybutylene adipate terephtalate ou polybutyrate (PBAT), le poly(ε-caprolactone) (PCL) et les copolymères du polybutylene succinate (PBS), par rapport au poids total de la composition ;
- de 0,2 à 5 %, et de préférence de 0,5 à 2% en poids d'au moins un additif hydrophobe choisi dans le groupe formé par le béhénamide, l'erucamide, la stéaramide et l'oléamide, par rapport au poids total de la composition.

Un premier avantage de ces compositions est leur impact écologique. Les compositions selon l'invention préparées à partir de polymères biodégradables permettent l'obtention d'articles biodégradables et de préférence compostables et/ou recyclables ayant un impact significativement moindre sur l'environnement que les articles préparés à partir de plastiques issus de la pétrochimie et non biodégradables.

En effet, les compositions selon l'invention peuvent être réalisées à partir de (co)polyesters issus de ressources renouvelables, dans ce cas, la composition est dite « biosourcée.

On entend par « biosourcés » ou « biosourcing », les plastiques fabriqués à partir de ressources d'origine végétale telles que le maïs, le manioc, la pomme de terre, le bois, le coton, les algues, la canne à sucre, la betterave, le caractère biosourcé est défini par la norme ASTM D6866-22.

Avantageusement, les compositions selon la présente invention sont préparées à partir de (co)polyesters dont au moins 50% en poids sont d'origine biosourcée tel que défini dans la norme ASTM D6866-22.

Les compositions selon la présente invention se distinguent par leur homogénéité permettant avantageusement la préparation de films monocouches stables et homogènes aptes à être utilisés pour la fabrication d'emballages souples pour l'alimentation. Ces films présentent en particulier des propriétés barrières améliorées notamment en termes de perméabilité à la vapeur d'eau, ils possèdent aussi une perméabilité à l'oxygène très satisfaisante pour les utilisations visées.

Ces compositions de (co)polyesters biodégradables présentent à la fois une bonne aptitude à être mise en œuvre par extrusion gonflage à l'échelle industrielle tout en conservant des propriétés physiques, mécaniques satisfaisantes.

De manière particulière, les compositions selon la présente invention présentent de bonnes propriétés de scellabilité permettant de façonner le film monocouche industriellement sous forme de sachets.

Ainsi un deuxième objet de la présente invention concerne un procédé de préparation du film monocouche à partir de la composition selon l'invention comprenant une étape d'extrusion gonflage.

Un troisième objet de l'invention vise un film monocouche comprenant, de préférence constitué par, la composition selon l'invention, ou préparé suivant le procédé de préparation selon l'invention, de manière préférée, le film monocouche présente une épaisseur allant de 35.10⁻⁶ m à 40.10⁻⁶ m.

Un quatrième objet de l'invention vise un article comprenant, de préférence constitué par, le film monocouche selon la présente invention. Avantageusement, l'article selon la présente invention est un sachet sur broche, dit «sachet wicket », de préférence destiné à l'emballage des produits de boulangerie en particulier le pain de mie.

L'article est avantageusement biodégradable et compostable.

On entend par « biodégradable « ou « biodégradabilité », la propriété d'un matériau à se dégrader sous une activité biologique, par exemple sous l'action d'enzymes et/ou de micro-organismes, par une réduction de sa masse molaire, en particulier la décomposition d'un composé chimique organique en dioxyde de carbone, eau et sels minéraux, des autres éléments présents (minéralisation) et l'apparition d'une nouvelle biomasse, sous l'action de micro-organismes en présence d'oxygène ; ou la décomposition en dioxyde de carbone, méthane, sels minéraux et création d'une nouvelle biomasse, en l'absence d'oxygène, elle est définie par la Norme Européenne EN 13432:2000, ainsi que son extension française **:** NF 14995.

On entend par « recyclable », la récupération d'une partie ou de la totalité des constituants d'un matériau arrivé en fin de vie ou d'un matériau issu de résidus de fabrication afin de les réintroduire dans le cycle de production du même matériau ou d'un autre matériau.

On entend par « compostable » ou « compostabilité », un procédé qui consiste à placer des produits fermentescibles dans des conditions (température, humidité, oxygénation, présence de micro-organismes du sol, etc.) permettant leur biodégradation. Pour être considéré comme compostable au sens de la norme EN 13432 : 2000, le matériau doit être biodégradé à au moins 90% au bout de 6 mois dans un milieu de compost industriel ; au moins 90% des résidus doivent avoir une taille inférieure à 2mm au bout de 3 mois de compostage ; et l'absence des effets écotoxiques doit être démontrée ainsi que la qualité agricole du compost obtenu.

Avantageusement les articles selon la présente invention sont compostables après utilisation en conditions de compostage industriel conformément à la norme EN 13432 : 2000 et en conditions de compostage domestique conformément à la norme NF T 51-800 : 2015.

D'autres aspects, avantages et propriétés de la présente invention sont présentées dans la description et les exemples qui suivent.

### Description de l'invention

### Composition

La composition selon la présente invention comprend un mélange d'au moins deux, de préférence trois (co)polyesters biodégradables.

La composition selon la présente invention comprend de 68 % à 75 %, de préférence de 69% à 75% en poids d'au moins un (co)polyester rigide choisi dans le groupe formé par le PBS, le PLA, PHA par rapport au poids total de ladite composition.

De préférence, la composition selon la présente invention comprend, en tant que (co)polyesters rigides, du PLA et au moins un autre polyester rigide choisi parmi le PBS et le PHA.

De manière encore préférée, elle comprend, en tant que (co)polyesters rigides, de 63 % à 72 % en poids d'au moins un polyester choisi dans le groupe formé par le PBS et le PHA par rapport au poids total de la composition et de 3 % à 7 %, de préférence de 4% à 6% en poids de PLA par rapport au poids total de la composition.

Par «(co)polyester rigide», au sens de la présente invention on entend un polymère présentant les caractéristiques suivantes : un module de rigidité supérieur à 450 MPa, de préférence supérieur à 500 MPa et inférieur à 3600 MPa et une élongation à la rupture supérieure à 2% et inférieure à 400%, de préférence inférieure à 350%

La composition selon la présente invention comprend aussi de 25% à 35 % en poids d'au moins un (co)polyester flexible choisi dans le groupe formé par le PBAT, le PCL et les copolymères du PBS de préférence le poly(butylène succinate adipate) (PBSA), par rapport au poids total de ladite composition. De préférence, la composition comprend de 25% à 30 % en poids de PBSA, par rapport au poids total de ladite composition.

Par «(co)polyester flexible», ou souple au sens de la présente invention on entend un polymère présentant les caractéristiques suivantes : un module de rigidité supérieur à 40 MPa et inférieur à 500 MPa, de préférence inférieur à 350 MPa et une élongation à la rupture supérieure à 300%, de préférence supérieure à 400% et inférieure à 700% .

La composition comprend également de 0,2 à 5 %, et de préférence de 0,5 à 2% en poids d'au moins un additif hydrophobe choisi dans le groupe formé par le béhénamide, l'erucamide, la stéaramide et l'oléamide, par rapport au poids total de la composition. De manière préférée, l'additif hydrophobe est le béhénamide.

La composition comprend également, en poids par rapport au poids total de la composition, de 0 à 5 %, et de préférence de 0,5 à 2% en poids d'au moins un polymère de vinyle choisi dans le groupe formé parmi le polyacétate de vinyle greffé ou non greffé et le polyacétate de vinyle d'éthylène (copolymères éthylène-acétate de vinyle) non greffé, nommé PVAc, ou le polyacétate de vinyle d'éthylène greffé. De préférence le polymère de vinyle est le polyacétate de vinyle (PVAc).

Par « polymère de vinyle greffé » on entend que le polymère de vinyle est modifié par greffage, de préférence avec au moins un agent choisi dans le groupe constitué par l'anhydride maléique, le méthacrylate de glycidyle, l'acrylate d'hydroxyéthyle, le méthacrylate de méthyle, l'acrylate de butyle, l'acide acrylique, de préférence l'anhydride maléique et le méthacrylate de glycidyle.

La composition comprend également de 0 à 10 %, de préférence de 0 à 5% d'au moins un additif choisi parmi les plastifiants, les agents glissants, les agents d'aide à la mise en œuvre (aide au process), les agents anti-blocage (« anti blocking agent » en langue anglaise).

Ainsi les compositions selon la présente invention présentent avantageusement un module de Young allant de 200 à 420 MPa, préférentiellement de 200 à 300 MPa.

Les compositions selon la présente invention présentent avantageusement une contrainte au seuil allant de 12 MPa à 30 MPa.

Les compositions selon la présente invention présentent avantageusement un allongement au seuil allant de 14% à 50%.

Les compositions selon la présente invention présentent avantageusement un allongement à la rupture allant de 400 % à 700%.

Le module de Young, encore appelé module de rigidité ou module d'élasticité est déterminé conformément à la norme NF EN ISO 527-1 du 2012-04-01.

La contrainte au seuil, l'allongement au seuil et l'allongement à la rupture sont également déterminés conformément à la norme NF EN ISO 527-1 du 2012-04-01.

La composition selon l'invention est apte à être utilisée pour la formation d'un film monocouche.

Par « film monocouche » on entend un film formé d'une seule couche de (co) polyesters, homogène. Avantageusement le film monocouche présente une épaisseur allant de 35.10⁻⁶ m à 40.10⁻⁶ m (35 à 40 microns)

Les inventeurs ont ainsi montré que les compositions selon l'invention présentent des propriétés mécaniques permettant la formation d'un film monocouche suffisamment souple et résistant pour être utilisé pour la fabrication de sachets d'emballage dit « wicket » encore appelés sachets sur broche.

En outre la composition selon l'invention présente une bonne aptitude à la mise en œuvre (processabilité) à l'échelle industrielle tout en conservant des propriétés physiques et mécaniques satisfaisantes. La composition est apte à être utilisée avec des machines d'emballage automatisées pour la formation de sachets souples pour l'emballage.

De plus les films selon la présente invention présentent une perméabilité à la vapeur d'eau particulièrement basse. La perméabilité à la vapeur d'eau des films selon la présente invention va de 70 à 180 en g/(m².jour), de préférence inférieure à 160 en g/(m².jour) et de manière encore préférée inférieure à 110 en g/(m².jour) déterminée conformément à la norme **ASTM E96-22,** sur des films d'épaisseur de 35.10⁻⁶ m.

La perméabilité à la vapeur d'eau est déterminée conformément à la norme **ASTM E96-22,** la méthodologie et les conditions de mesures liées à cette norme sont détaillées à l'Exemple 2 ci-dessous.

La perméabilité à l'oxygène (P O₂) est déterminée conformément aux normes ASTM F1927 : 2020 sur des films d'épaisseur de 35.10⁻⁶ m.

Les compositions selon l'invention peuvent également comprendre des additifs aptes à améliorer l'esthétique notamment la brillance et/ou le glissant ou encore réduire l'opacité des films monocouches.

Les films monocouches selon la présente invention sont stables pendant plusieurs mois : leurs propriétés physiques ne sont pas dégradées.

Les articles selon la présente invention conviennent parfaitement à un conditionnement automatique pour l'emballage de produits de panification, de boulangerie et de pâtisserie, en particulier le pain de mie, les viennoiseries, pains briochés, pains au chocolats, croissants et brioches.

### Procédé de préparation d'un film monocouche

Le film monocouche selon la présente invention peut être obtenu par un procédé choisi parmi les procédés d'extrusion « cast » encore appelé filière plate, d'extrusion bulle encore appelée extrusion gonflage, ou extrusion tubulaire.

De manière préférée, le film monocouche selon l'invention est obtenu par un procédé d'extrusion gonflage.

L'extrusion gonflage est un procédé de la plasturgie qui consiste à mettre en forme des films ou gaines en matière plastique. Une mince gaine est extrudée verticalement à travers une filière annulaire. Cette gaine, momentanément pincée, est gonflée par un flux d'air qui est introduit par l'axe de la tête-filière. Sous l'action de l'étirage et du gonflage, une bulle est formée. Un refroidissement à air permet la solidification de la gaine qui est ensuite aplatie par deux panneaux convergeant vers des rouleaux de tirage. La vitesse de rotation de ces rouleaux permet d'ajuster l'épaisseur de la gaine. Le diamètre de la gaine est, quant à lui, réglé par le volume d'air de la gaine.

Ce procédé, suivi d'un façonnage comprenant des étapes de découpe puis scellage, permet l'obtention de manière automatisée, simple, pratique et économique d'un article sous forme de sachet en particulier de sac de plastique sur broche ou sachet wicket.

En outre la composition selon la présente invention permet l'obtention de sacs en plastique sur broche ou sachets wicket imprimables. L'étape d'impression sur film a généralement lieu avant la découpe et le façonnage. Bien entendu il ressort des compétences de l'homme du métier de sélectionner l'encre présentant les meilleures propriétés d'impression en fonction du résultat visuel souhaité.

Tout en assurant une conservation optimale et en gardant intact le moelleux des viennoiseries, ce sac wicket procure une grande flexibilité et peut se décliner en plusieurs aspects, avec ou sans fermetures, en diverses formes, matériaux et coloris.

Les exemples qui suivent visent à illustrer l'invention sans en limiter la portée.

### Exemples

### Exemple 1 - Compositions

Dans le tableau 1 sont présentées les compositions conformes à l'invention. Les proportions des différents composants sont exprimées en pourcentage en poids par rapport au poids de la composition finale.

Le PBS utilisé est commercialisé sous la dénomination FZ91 par la société PTT MCC Biochem Company Ltd.

Le PBSA utilisé est commercialisé sous la dénomination FD92 par la société PTT MCC Biochem Company Ltd.

Le PLA utilisé est commercialisé sous la dénomination LX975 par la société TotalEnergy Corbion.

Le PVAc utilisé est un produit sous forme de microbilles commercialisé sous le nom Vinnex par la société WACKER.

**[Tableau 1] Compositions conformes à l'invention**

| | F1 | F2 | F3 | F4 | F5 |
|---|---|---|---|---|---|
| % PBS (rigide) | 69,3 | 64,5 | 64,3 | 64,0 | 63,7 |
| % PBSA (flexible) | 29,7 | 28,3 | 28,2 | 28,1 | 27,9 |
| % PLA (rigide) | 0,0 | 4,9 | 4,9 | 4,8 | 4,8 |
| % Additif Hydrophobe (1) | 1,0 | 1,0 | 1,0 | 1,0 | 1,0 |
| PVAc | 0,0 | 1,0 | 1,0 | 1,0 | 1,0 |
| Agent glissant (2) | 0,0 | 0,2 | 0,4 | 0,7 | 1,0 |
| Agent anti blocage : talc | 0,0 | 0,1 | 0,2 | 0,4 | 0,6 |
| Somme polyesters rigides | 69.3 | 69.4 | 69.2 | 68.8 | 68.5 |

| | | | | | |
|---|---|---|---|---|---|
| (1) Crodamide BR commercialisé par la société CRODA (2) Incroslip SL commercialisé par la société CRODA. | | | | | |

Dans le tableau 2 sont présentées les compositions comparatives. Les proportions des différents composants sont exprimées en pourcentage en poids par rapport au poids de la composition finale.

**[Tableau 2] -Compositions comparatives**

| | C1 | C2 |
|---|---|---|
| PBS (rigide) | 70 | 62,0 |
| PBSA (flexible) | 30 | 27,2 |
| PLA (rigide) | 0,0 | 4,7 |
| Additif Hydrophobe (1) | 0,0 | 0,9 |
| PVAc | 0,0 | 0,9 |
| Agent glissant (2) | 0,0 | 2,8 |
| Agent anti blocage : talc | 0,0 | 1,5 |
| Somme polyester rigides | 70 | 66.7 |

### Procédé de préparation des compositions

Les différents composants des compositions sont mélangés (compoundés) par un processus d'extrusion, c'est-à-dire que les (co)polyesters et additifs sont mélangés à l'aide d'une extrudeuse. L'extrudeuse utilisée est une extrudeuse bi-vis ZSE 27 MAXX/HP. Elle est composée d'une bi-vis sans fin qui tourne à l'intérieur du fourreau cylindrique régulé en température par des systèmes de chauffe et de refroidissement. La bi-vis présente un profil permettant d'obtenir un mélange homogène et une bonne dispersion des différents composants de la formulation en sortie de filière. Les polymères et les additifs sont introduits dans les trémies d'alimentation avant d'être envoyés, selon un ordre et une zone précise dans l'extrudeuse. L'extrudeuse permet de convoyer les (co)polyesters biodégradables et les additifs de ladite composition, de les fondre, les mettre en pression et les mélanger afin d'obtenir un jonc en sortie de filière qui sera ensuite refroidi dans un bain d'eau avant d'être granulé puis mis en œuvre par extrusion gonflage.

Le réglage des températures des différentes zones de l'extrudeuse a été réalisé en cohérence avec les températures de changement de phases des (co)polyesters biodégradables et leur température de dégradation. La vitesse de vis à l'intérieur du fourreau a été choisie de façon à assurer un bon mélange de ladite composition par cisaillement sans dégrader la matière. Les paramètres utilisés sont rassemblés dans le tableau ci-dessous.

Les (co)polyesters biodégradables sont pré-dosés et introduits dans la trémie principale. Les additifs sont pré-dosés et incorporés dans une trémie secondaire.

Le tableau 3 présente les paramètres de l'extrudeuse bi-vis pour la production de la composition sous forme de granulés.

**Tableau 3 : Paramètres de l'extrudeuse bi-vis**

| | | | | | | |
|---|---|---|---|---|---|---|
| Zone | 1 | 2 | 3 | 4 | 5 | 6 |
| Température (°C) | 140 | 140 | 145 | 145 | 150 | 150 |
| Zone | 7 | 8 | 9 | 10 | 11 | 12 |
| Température (°C) | 155 | 160 | 160 | 165 | 165 | 170 |

Vitesse : 45-60 kg/h.

### Extrusion gonflage

L'extrusion gonflage a été réalisée avec une extrudeuse monovis CMG modèle 4530/HTM avec refroidissement à air, possédant une filière à alimentation centrale à canaux rayonnants et un diamètre de filière de 0,1m (100 mm).

Le tableau 4 présente les paramètres de l'extrudeuse d'extrusion gonflage) pour la production du film monocouche

**Tableau 4 : Paramètres de l'extrudeuse bulle (extrusion gonflage)**

| | | | | | | | |
|---|---|---|---|---|---|---|---|
| Zone | 1 | 2 | 3 | 4 | 5 | 6 | 7 |
| Température (°C) | 135 | 140 | 150 | 155 | 160 | 165 | 165 |
| Vitesse vis (tr/min) | 20-40 | | | | | | |
| Vitesse tirage (m/min) | 7-11 | | | | | | |
| % air extérieur | 30-40 | | | | | | |

### Exemple 2 - Propriétés des monofilms

### Propriétés physiques

Les valeurs de module de Young, de contrainte au seuil, d'allongement au seuil et d'allongement à la rupture des compositions ont été mesurées conformément aux protocoles de la norme EN ISO 527-1 (2012-04-01).

Il a ainsi été vérifié que les compositions selon l'invention présentent :
un module de Young allant de 200 à 420 MPa, préférentiellement de 200 à 300 MPa ;
une contrainte au seuil allant de 12 MPa à 30 MPa ;
un allongement au seuil allant de 14% à 50% ;
un allongement à la rupture supérieur allant de 400 % à 700%.

### Perméabilité à la vapeur d'eau

### 1. Préparation des échantillons

Les échantillons des films monocouches à tester ont été placés à 23°C tout au long de leur stockage avant analyse. Les films monocouches présentaient une épaisseur de 35.10⁻⁶ m.

### 2. Conditions de réalisation des essais

Les essais ont été réalisés dans les conditions suivantes :
- Emplacement de la découpe : les prélèvements d'éprouvettes ont été effectués en différents endroits de la bobine, sur la face externe de la bobine :
- Surface des éprouvettes : 50 cm²
- l'analyse de l'épaisseur des éprouvettes soumises aux essais a été réalisée en 5 points des éprouvettes.

### 3. Méthodologie

L'analyse est réalisée selon une méthode basée sur la **norme ASTM E96-22** selon la méthode du dessicant (méthode gravimétrique). Selon cette norme, des capsules contenant un produit desséchant (gel de silice anhydre) et obturées par le matériau c'est-à-dire le film monocouche soumis à l'essai sont placées en atmosphère contrôlée. Ces capsules sont pesées à intervalles de temps réguliers. L'augmentation de masse permet, dès qu'elle est proportionnelle à l'intervalle de temps, de déterminer le coefficient de transmission à la vapeur d'eau.

Les taux de transmission à la vapeur d'eau sont exprimés en g/(m².jour).

### 4. Conditions de mesure

Les mesures ont été effectuées dans les conditions suivantes : dans une enceinte climatique, avec une balance de précision 10⁻⁴g, en utilisant des coupelles de perméabilité.

Les valeurs de température et d'humidité de consigne : 38°C et 90%HR.

Les essais ont été effectués en triple c'est-à-dire que le nombre d'échantillons soumis aux essais a été de 3 par référence.

La perméabilité à la vapeur d'eau a été mesurée sur des films monocouches de 35.10⁻⁶m.

Dans le tableau 4 sont regroupées les valeurs de perméabilité à la vapeur d'eau des films monocouches de 35.10⁻⁶ m obtenus à partir des compositions conformes et comparatives présentées ci-dessus.

**[Tableau 4]**

| Composition des films | ***P H₂O*** |
|---|---|
| | g/(m².jour) |
| F1 | 93 ± 4 |
| F2 | 108 ± 7 |
| F3 | 152 ± 9 |
| F4 | 163 ± 10 |
| F5 | 171 ± 5 |
| C1 | *416* ± *16* |
| C2 | *225* ± *23* |

Les films monocouches conformes à l'invention F1- F5 présentent une perméabilité à la vapeur d'eau nettement plus basse que les films monocouches comparatifs C1 et C2.

### Perméabilité à l'oxygène

### 1. Préparation des échantillons

Les échantillons des films monocouches à tester ont été placés à 23°C tout au long de leur stockage avant analyse. Les films monocouches présentaient une épaisseur de 35.10⁻⁶ m.

### 2. Conditions de réalisation des essais

Les essais ont été réalisés dans les conditions suivantes :
- Emplacement de la découpe : les prélèvements d'éprouvettes ont été effectués en différents endroits de la bobine, sur la face externe de la bobine :
- Surface des éprouvettes : 50 cm²
- l'analyse de l'épaisseur des éprouvettes soumises aux essais a été réalisée en 5 points des éprouvettes.

### 3. Méthodologie

L'analyse est réalisée selon une méthode basée sur la norme ASTM F1927 : 2020.

Selon cette norme, des échantillons sont découpés et placés dans les cellules de l'appareil de mesure de perméabilité. La face interne du matériau est balayée avec le gaz vecteur en continu tandis que la face externe est balayée avec le gaz test. L'oxygène diffuse à travers le matériau et est dirigé vers le détecteur.

Le coefficient de transfert à l'oxygène est exprimé en cm3/(m².jour.1atm).

### 4. Conditions de mesure

Les mesures ont été effectuées dans les conditions suivantes :
- Appareil : OXTRAN 2/22 H avec détecteur coulométrique ; - Gaz vecteur : mélange N2/5%H2 ; Gaz test : oxygène pur ;
- Les valeurs de température et d'humidité de consigne : 23°C et Humidité relative à l'intérieur 50% - Humidité relative à l'extérieur 50% Les essais ont été effectués en double c'est-à-dire que le nombre d'échantillons soumis aux essais a été de 2 par référence.

La perméabilité à la vapeur d'eau a été mesurée sur des films monocouches de 35.10⁻⁶m.

Les compositions selon la présente invention présentent un coefficient de perméabilité à l'oxygène allant de 410 à 520 cm³/(m².jour.atm). Cette gamme de valeur est très satisfaisante pour l'application visée puisqu'elle est largement inférieure à la valeur obtenue avec des films en plastique conventionnel tels que les polyéthylènes ou polypropylènes.

Les compositions selon la présente invention permettent l'obtention de films monocouches présentant une résistance et une souplesse adéquates pour les utilisations visées.

Ces emballages présentent un toucher agréable (« soft touch » en langue anglaise).

Ces films sont suffisamment résistant pour une utilisation pour l'emballage de produits de boulangerie, ils ne sont pas facilement déchirables.

Les films obtenus sont aptes au contact alimentaire tel que défini par le règlement (EU) N°10/2011 (RÈGLEMENT (UE) No 10/2011 de la commission du 14 janvier 2011). Il a été observé que du pain de mie conservé dans un sachet sur broche (sachet wicket) fabriqué à partir d'une composition selon l'invention conserve ses propriétés nutritionnelle et organoleptiques pendant au moins 17 jours.

Les films obtenus présentent une perméabilité à la vapeur d'eau inférieure à 180 en g/(m².jour), de préférence inférieure à 160 en g/(m².jour) déterminée conformément à la norme ASTM E96-22, sur des films d'épaisseur de 35.10⁻⁶ m..

## Revendications

1. Composition comprenant :
- de 68% à 75 %, de préférence de 69% à 75% en poids d'au moins un (co)polyester rigide choisi dans le groupe formé par le polybutylene succinate, le polylactide, le polyhydroxyalcanoate, par rapport au poids total de la composition ;
- de 25% à 35 % en poids d'au moins un (co)polyester flexible choisi dans le groupe formé par le polybutylene adipate terephtalate, le poly(ε-caprolactone) et les copolymères du polybutylene succinate, par rapport au poids total de la composition ;
- de 0,2 à 5 % et de préférence de 0,5 à 2% en poids d'au moins un additif hydrophobe choisi dans le groupe formé par le béhénamide, l'erucamide, la stéaramide et l'oléamide, par rapport au poids total de la composition.

2. Composition selon la revendication 1 comprenant, en tant que (co)polyesters rigides :
- de 63 % à 72 % en poids d'au moins un polyester choisi dans le groupe formé par le polybutylene succinate et le polyhydroxyalcanoate par rapport au poids total de la composition et
- de 3 % à 7 %, de préférence de 4% à 6% en poids de polylactide par rapport au poids total de la composition.

3. Composition selon l'une quelconque des revendications précédentes comprenant, en tant que polymère flexible :
- de 25% à 30 % en poids de poly(butylène succinate adipate) par rapport au poids total de ladite composition.

4. Composition selon l'une quelconque des revendications précédentes comprenant de 0 à 5 %, et de préférence de 0,5 à 2% en poids d'au moins un polymère de vinyle choisi dans le groupe formé parmi le polyacétate de vinyle greffé ou non greffé et le polyacétate de vinyle d'éthylène non greffé ou le polyacétate de vinyle d'éthylène greffé, de préférence le polymère de vinyle est le polyacétate de vinyle.

5. Composition selon l'une quelconque des revendications précédentes comprenant de 0 à 10 %, de préférence de 0 à 5% d'au moins un additif choisi parmi les plastifiants, les agents glissants, les agents d'aide à la mise en œuvre, les agents anti-blocage.

6. Composition selon l'une quelconque des revendications précédentes comprenant :
- de 60 à 65 % en poids de PBS, et de 3 à 7% de PLA, à titre de polymères rigides, par rapport au poids total de la composition ;
- de 25 à 30 % en poids de PBSA à titre de polymère flexible, par rapport au poids total de la composition ;
- de 0,5 à 2% en poids de béhénamide par rapport au poids total de la composition ;
- de 0,2 à 5 %, et de préférence de 0,5 à 2% en poids de polyacétate de vinyle par rapport au poids total.

7. Composition selon l'une quelconque des revendications précédentes préparées à partir de (co)polyesters dont au moins 50% en poids sont d'origine biosourcée tel que défini par la norme ASTM D6866-22.

8. Procédé de préparation d'un film monocouche à partir de la composition selon l'une quelconque des revendications 1 à 7 comprenant une étape d'extrusion gonflage.

9. Film monocouche comprenant, de préférence étant constitué par, la composition selon l'une quelconque des revendications 1 à 7, ou préparé suivant le procédé selon la revendication 8.

10. Film monocouche selon la revendication précédente d'épaisseur allant de 35.10⁻⁶ m à 40.10⁻⁶ m.

11. Film monocouche selon la revendication 9 ou 10 présentant les propriétés suivantes : une perméabilité à la vapeur d'eau allant de 70 à 180 en g/(m².jour), de préférence inférieure à 160 en g/(m².jour), et de manière encore préférée inférieure à 110 en g/(m².jour), la perméabilité à la vapeur d'eau étant déterminée conformément à la norme ASTM E96-22, sur des films d'épaisseur de 35.10⁻⁶ m.

12. Article comprenant, de préférence étant constitué par, le film monocouche selon l'une quelconque des revendications 9 à 11.

13. Article selon la revendication 12 caractérisé ce qu'il s'agit d'un sachet sur broche, dit «sachet wicket », de préférence destiné à l'emballage des produits de boulangerie en particulier le pain de mie.

## Patentansprüche

1. Zusammensetzung bestehend aus:
- 68 % bis 75 % oder vorzugsweise 69 % bis 75 % bezogen auf das Gesamtgewicht mindestens eines (Co)Polyesters mit hoher Steifigkeit, welcher aus der von Polybutylensuccinat, Polylactid und Polyhydroxyalkanoat gebildeten Gruppe ausgewählt wird;
- 25 % bis 35 %, bezogen auf das Gesamtgewicht, mindestens eines flexiblen (Co)Polyesters, welcher aus der von Poly(butylen adipat-co-terephthalat), Poly(ε-caprolacton) und Copolymeren von Polybutylensuccinat gebildeten Gruppe ausgewählt wird;
- 0,2 bis 5 % oder vorzugsweise 0,5 bis 2 % bezogen auf das Gesamtgewicht, mindestens eines hydrophoben Additivs, welches aus der von Behenamid, Erucamid, Stearamid und Oleamid gebildeten Gruppe ausgewählt wird.

2. Zusammensetzung nach Anspruch 1, in welcher folgende (Co)Polyester mit hoher Steifigkeit enthalten sind:
- 63 % bis 72 %, bezogen auf das Gesamtgewicht, mindestens eines Polyesters, welcher aus der von Polybutylensuccinat und Polyhydroxyalkanoat gebildeten Gruppe ausgewählt wird und
- 3 % bis 7 % oder vorzugsweise 4 % bis 6 % Polylactid, bezogen auf das Gesamtgewicht der Zusammensetzung.

3. Zusammensetzung nach einem der vorgenannten Ansprüche, in welcher das folgende flexible Polymer enthalten ist:
- 25 % bis 30 % Poly(butylen succinat-co-adipat, bezogen auf das Gesamtgewicht der genannten Zusammensetzung.

4. Zusammensetzung nach einem der vorgenannten Ansprüche, in welcher bezogen auf das Gesamtgewicht 0 bis 5 % oder vorzugsweise 0,5 % bis 2 % mindestens eines Vinylpolymers enthalten sind, das aus der Gruppe des gepfropften oder ungepfropften Polyvinylacetats und des gepfropften oder ungepfropften Ethylen-Vinylacetat-Copolymers ausgewählt wird, wobei das Vinylpolymer vorzugsweise Polyvinylacetat ist.

5. Zusammensetzung nach einem der vorgenannten Ansprüche, in welcher 0 bis 10 % oder vorzugsweise 0 bis 5 % mindestens eines Additivs enthalten sind, das unter den Weichmachern, Gleitmitteln, Verarbeitungshilfsmitteln, Antiblockmitteln gewählt wird.

6. Zusammensetzung nach einem der vorgenannten Ansprüche bestehend aus:
- 60 % bis 65 % PBS und 3 % bis 7 % PLA als Polymere mit hoher Steifigkeit, bezogen auf das Gesamtgewicht der Zusammensetzung;
- 25 % bis 30 % PBSA als flexibles Polymer, bezogen auf das Gesamtgewicht der Zusammensetzung;
- 0,5 bis 2 % Behenamid, bezogen auf das Gesamtgewicht der Zusammensetzung;
- 0,2 bis 5 % oder vorzugsweise 0,5 bis 2 % Polyvinylacetat, bezogen auf das Gesamtgewicht.

7. Zusammensetzung nach einem der vorgenannten Ansprüche, die aus (Co-)Polyestern hergestellt ist, von denen mindestens 50 % des Gewichtes aus biobasierten Quellen stammen, wie in der Norm ASTM D6866-22 definiert.

8. Verfahren zur Herstellung einer Monoschichtfolie aus der Zusammensetzung, die einem der Ansprüche 1 bis 7 entspricht, und das einen Blasformschritt umfasst.

9. Monoschichtfolie, welche die Zusammensetzung nach einem der Ansprüche 1 bis 7 umfasst oder vorzugsweise aus dieser besteht oder mittels des in Anspruch 8 beschriebenen Verfahrens hergestellt ist.

10. Monoschichtfolie nach dem vorgenannten Anspruch mit einer Dicke von 35.10⁻⁶ m bis 40.10⁻⁶ m.

11. Monoschichtfolie nach Anspruch 9 oder 10 mit den folgenden Eigenschaften: Wasserdampfdurchlässigkeit von 70 bis 180 g/(m²·Tag) oder vorzugsweise unter 160 g/(m²·Tag) oder noch besser unter 110 g/(m²·Tag), wobei die Wasserdampfdurchlässigkeit gemäß ASTM E96-22 an Folien mit einer Dicke von 35.10⁻⁶ m bestimmt wird.

12. Erzeugnis, das die Monoschichtfolie gemäß einem der Ansprüche 9 bis 11 umfasst oder vorzugsweise aus dieser besteht.

13. Erzeugnis nach Anspruch 12, **dadurch gekennzeichnet, dass** es sich um einen Stiftstapelbeutel, einen sogenannten "Wicket-Beutel", handelt, der vorzugsweise zum Verpacken von Backwaren, insbesondere Toastbrot, bestimmt ist.

## Claims

1. Composition comprising:
- from 68% to 75%, preferably from 69% to 75% by weight of at least one rigid (co)polyester selected from the group formed by polybutylene succinate, polylactide, polyhydroxyalkanoate, relative to the total weight of the composition;
- from 25% to 35% by weight of at least one flexible (co)polyester selected from the group formed by polybutylene adipate terephthalate, poly(ε - caprolactone) and copolymers of polybutylene succinate, relative to the total weight of the composition;
- from 0.2 to 5% and preferably from 0.5 to 2% by weight of at least one hydrophobic additive selected from the group formed by behenamide, erucamide, stearamide and oleamide, relative to the total weight of the composition.

2. Composition according to claim 1 comprising, as rigid (co)polyesters:
- from 63% to 72% by weight of at least one polyester selected from the group formed by polybutylene succinate and polyhydroxyalkanoate relative to the total weight of the composition, and
- from 3% to 7%, preferably from 4% to 6% by weight of polylactide relative to the total weight of the composition.

3. Composition according to any one of the preceding claims comprising, as flexible polymer:
- from 25% to 30% by weight of poly(butylene succinate adipate) with respect to the total weight of said composition.

4. Composition according to any one of the preceding claims comprising from 0 to 5%, and preferably from 0.5 to 2% by weight of at least one vinyl polymer selected from the group formed from grafted or non-grafted polyvinyl acetate and non-grafted polyethylene vinyl acetate or grafted polyethylene vinyl acetate, preferably the vinyl polymer is polyvinyl acetate.

5. Composition according to any one of the preceding claims comprising from 0 to 10%, preferably from 0 to 5% of at least one additive chosen from plasticizers, slip agents, implementation aids, anti-blocking agents.

6. **Composition** according to any one of the preceding claims comprising:
- from 60 to 65% by weight of PBS, and from 3 to 7% of PLA, as rigid polymers, relative to the total weight of the composition;
- from 25 to 30 % by weight of PBSA as flexible polymer, relative to the total weight of the composition;
- from 0.5 to 2% by weight of behenamide relative to the total weight of the composition;
- from 0.2 to 5%, and preferably from 0.5 to 2% by weight of polyvinyl acetate relative to the total weight.

7. Composition according to any one of the preceding claims prepared from (co)polyesters of which at least 50% by weight are biobased as defined by the ASTM D6866-22 standard.

8. Method for preparing a single-layer film from the composition according to any one of claims 1 to 7 comprising a step of extrusion blowing.

9. Single-layer film comprising, preferably being constituted of, the composition according to any one of claims 1 to 7, or prepared according to the method according to claim 8,

10. Single-layer film according to the preceding claim having a thickness ranging from 35.10⁻⁶ m to 40.10⁻⁶ m.

11. Single-layer film according to claim 9 or 10 having the following properties: a water vapor permeability ranging from 70 to 180 in g/(m².day), preferably less than 160 in g/(m².day), and in an even more preferred manner less than 110 in g/(m².day), the water vapor permeability being determined in accordance with the ASTM E96-22 standard, on films of 35.10⁻⁶ m thickness.

12. Article comprising, preferably being constituted of, the single-layer film according to any one of claims 9 or 11.

13. Article according to claim 12 **characterized in that** it is a wicket bag, preferably intended for packaging bakery products, in particular sandwich bread.
